# EUROPÄISCHE PATENTSCHRIFT

(11) **EP 2 065 863 B1**
(45) Veröffentlichungstag und Bekanntmachung des Hinweises auf die Patenterteilung: **29.12.2010**
(21) Anmeldenummer: 07122008.1
(22) Anmeldetag: 30.11.2007
(51) Int. Cl.: G08B 25/10, G08B 25/00, H04W 4/22

(54) **Qualitätsbestimmung einer Kommunikationsverbindung in einem funkbetriebenen Multi-Hop Gefahrenmeldesystem**
Quality estimation of a communication link in a broadcast multihop emergency signalling system
Estimation de la qualité d'une liaison de communication au sein d'un système de signalement de danger par radio à sauts multiples

(43) Veröffentlichungstag der Anmeldung: 03.06.2009
(73) Patentinhaber: SIEMENS AKTIENGESELLSCHAFT, 80333 München (DE)
(72) Erfinder: Imfeld, Berni, 8610 Uster (CH); Künzli, Dr. Simon, 8400 Winterthur (CH); Blum, Philipp, 6005 Luzern (CH)

(56) Entgegenhaltungen:
- SARADHI C V ET AL: "Reliability-constrained least-cost routing in multihop networks" DESIGN OF RELIABLE COMMUNICATION NETWORKS, 2003. (DRCN 2003). PROCEEDINGS. FOURTH INTERNATIONAL WORKSHOP ON OCT. 19-22, 2003, PISCATAWAY, NJ, USA,IEEE, 19. Oktober 2003 (2003-10-19), Seiten 197-202, XP010688069 ISBN: 0-7803-8118-1
- WOO A ET AL: "TAMING THE UNDERLYING CHALLENGES OF RELIABLE MULTIHOP ROUTING IN SENSOR NETWORKS" SENSYS'03. PROCEEDINGS OF THE 1ST. INTERNATIONAL CONFERENCE ON EMBEDDED NETWORKED SENSOR SYSTEMS. LOS ANGELES, CA, NOV. 5 - 7, 2003, PROCEEDINGS OF THE INTERNATIONAL CONFERENCE ON EMBEDDED NETWORKED SENSOR SYSTEMS, NEW YORK, NY : ACM, US, Bd. CONF. 1, November 2003 (2003-11), Seiten 14-27, XP001504084 ISBN: 1-58113-707-9
- CHEN J ET AL: "A RELIABLE BROADCAST/MULTICAST SCHEME FOR MULTIHOP MOBILE AD HOC NETWORKS" IEICE TRANSACTIONS ON COMMUNICATIONS, COMMUNICATIONS SOCIETY, TOKYO, JP, Bd. E89B, Nr. 3, März 2006 (2006-03), Seiten 867-878, XP001240956 ISSN: 0916-8516

## Beschreibung

Die vorliegende Erfindung betrifft das technische Gebiet der funkbetriebenen Gefahrmeldeanlagen. Die vorliegende Erfindung betrifft insbesondere ein Verfahren zum Bestimmen der Qualität einer Kommunikationsverbindung zwischen einer ausgewählten Nebenstation von einer Mehrzahl an Nebenstationen und einer Hauptstation eines funkbetriebenen Multi-Hop Gefahrenmeldesystems. Die vorliegende Erfindung betrifft ferner ein Verfahren zum Bestimmen des Gesamtstatus eines funkbetriebenen Multi-Hop Gefahrenmeldesystems, welches eine Hauptstation und eine Mehrzahl von Nebenstationen aufweist. Außerdem betrifft die vorliegende Erfindung eine ausgewählte Nebenstation für ein funkbetriebenes Multi-Hop Gefahrenmeldesystem und funkbetriebenes Multi-Hop Gefahrenmeldesystem, welche zur Durchführung des oben genannten Verfahrens zum Bestimmen der Qualität einer Kommunikationsverbindung eingerichtet sind. Die vorliegende Erfindung betrifft außerdem ein computerlesbares Speichermedium sowie ein Programm-Element, welche Instruktionen zur Durchführung des erfindungsgemäßen Verfahrens zum Bestimmen der Qualität einer Kommunikationsverbindung enthalten.

Funkbetriebenen Multi-Hop Gefahrenmeldesysteme weisen eine als Zentrale dienende Hauptstation und mehrere Nebenstationen auf, die über eine direkte Funkverbindung oder über eine indirekte Funkverbindung mit der Hauptstation verbunden sind. Im Falle einer indirekten Funkverbindung benutzt eine ausgewählte Nebenstation andere intermediäre Nebenstationen um ihr Sendesignal an die Hauptstation weiter zu leiten. Damit hängt die Kommunikationssicherheit einer Funkverbindung zwischen der ausgewählten Nebenstation und der Hauptstation auch von dem Funktionieren der in die indirekte Funkübertragung involvierten Nebenstationen ab.

Das Artikel "Reliability-constrained least-cost routing in multihop networks" von Saradhi C V, Gurusamy M und Zhou Luying, Design of Reliable Communication Networks, 2003. (DRCN 2003). Proceedings Fourth International Workshop on Oct. 19-22, 2003, Piscataway, NJ, USA, IEEE, bespricht Aspekte der Zuverlässigkeit eines Multi-Hop Netzwerkes.

EP1978686 (Anmeldetag 05.04.2007, Veröffentlichungstag 08.10.2008) offenbart ein Multi-Hop Funk-Gefahrenmeldesystem.

Im Bereich der Gefahrmeldetechnik ist die Kommunikationssicherheit eines Gefahrmeldesystems jedoch von herausragender Bedeutung um in einem Gefahrenfall eine zügige Meldung an die Hauptstation zu gewährleisten. Diese kann dann geeignete Maßnahmen wie beispielsweise die Evakuierung eines Gebäudes, das Schließen oder Öffnen von Türen, die Aktivierung von Feuerlöschanlagen, die Meldung an eine Einsatzleitzentrale von Feuerwehr oder Polizei und/oder dergleichen veranlassen.

Für die Gefahrmeldetechnik gibt es eine als Norm VDE0833 bekannte Vorschrift, in der beispielsweise eine Regel für einen bestimmten Fehler beschrieben ist, der in drahtgebundenen Systemen auftreten kann. Diese Regel besagt, dass durch einen Kurzschluss oder durch eine Unterbrechung einer Verbindung nicht mehr als 10 Handtaster oder 32 automatische Brandmelder vom System getrennt werden. In der Terminologie für drahtgebundene Systeme bedeutet dies, dass nicht mehr als 10 Handtaster, bzw. 32 automatische Melder an einem durch eine einzige Drahtverbindung definierten Stich hängen dürfen. Ansonsten müssen sogenannte Loops bzw. Schleifen verwendet werden, welche eine doppelte Drahtverbindung bereitstellen.

Im übertragenen Sinn bedeutet diese Regel für drahtlose Gefahrenmeldesysteme, dass typischerweise zwei unabhängige Kommunikationspfade von jeder Nebenstation zur Hauptstation existieren müssen. Die Anzahl an unabhängigen Kommunikationspfaden ist damit ein Maß für die Qualität bzw. für die Kommunikationssicherheit zwischen einer ausgewählten Nebenstation und der Hauptstation eines funkbetriebenen Multi-Hop Gefahrenmeldesystems.

Der Erfindung liegt die Aufgabe zugrunde, ein Verfahren, eine ausgewählte Nebenstation, ein funkbetriebenes Multi-Hop Gefahrenmeldesystem, ein computerlesbares Speichermedium sowie ein Programm-Element zum Bestimmen der Qualität einer Kommunikationsverbindung zwischen einer ausgewählten Nebenstation und einer Hauptstation eines funkbetriebenen Multi-Hop Gefahrenmeldesystems anzugeben.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Verfahren zum Bestimmen der Qualität einer Kommunikationsverbindung zwischen einer ausgewählten Nebenstation von einer Mehrzahl an Nebenstationen und einer Hauptstation eines funkbetriebenen Multi-Hop Gefahrenmeldesystems beschrieben. Das beschriebene Verfahren weist auf (a) ein Ermitteln eines Wertes eines ersten Parameters für die ausgewählte Nebenstation, wobei der Wert des ersten Parameters indikativ ist für die Verbindungssicherheit lediglich zwischen der ausgewählten Nebenstation und der Hauptstation, (b) ein Ermitteln eines Wertes eines zweiten Parameters für die ausgewählte Nebenstation, wobei der Wert des zweiten Parameters indikativ ist für die Verbindungssicherheiten lediglich zwischen jeweils unmittelbar benachbarten Nebenstationen der ausgewählten Nebenstation und der Hauptstation, und (c) ein Bestimmen der Qualität der Kommunikationsverbindung zwischen der ausgewählten Nebenstation und der Hauptstation basierend auf lediglich dem Wert des ersten Parameters und dem Wert des zweiten Parameters.

Dem beschriebenen Verfahren liegt die Erkenntnis zugrunde, dass die Qualität einer Verbindung zwischen der ausgewählten Nebenstation und der Hauptstation des funkbetriebenes Multi-Hop Gefahrenmeldesystems lediglich basierend auf lokal und aktuell erhältlichern Informationen der ausgewählten Nebenstation (dargestellt durch den Wert des ersten Parameters) und auf Informationen aus der unmittelbaren Nachbarschaft der ausgewählten Nebenstation (dargestellt durch den Wert des zweiten Parameters) bestimmt werden kann. Damit kann die Verbindungsqualität auf Ressourcen sparende Weise bestimmt werden. Es ist nicht notwendig, dass die ausgewählte Nebenstation ein vollständiges Bild des gesamten Gefahrenmeldesystems in einem Speicher vorhält.

Für die Verbindungsqualität der ausgewählten Nebenstation und/oder der unmittelbar benachbarten Nebenstationen der ausgewählten Nebenstation können direkte und/oder indirekte Verbindungen zwischen der jeweiligen Nebenstation und der Hauptstation berücksichtigt werden.

Die Informationen aus der unmittelbaren Nachbarschaft der ausgewählten Nebenstation (dargestellt durch den Wert des zweiten Parameters) können beispielsweise durch einen Datenaustausch zwischen der ausgewählten Nebenstation und deren unmittelbaren Nachbarn erhalten werden. In diesem Fall liegt bei einem gerade neu aufgebauten Gefahrenmeldesystem zu Beginn der Wert des ersten Parameters lediglich für die Hauptstation vor, sofern die Hauptstation in einer Grenzfallbetrachtung überhaupt als ausgewählte Nebenstation betrachtet werden kann. Der Wert des zweiten Parameters liegt zu Beginn weder für die Hauptstation noch für eine Nebenstation vor. Dies bedeutet, dass die Werte für den ersten und den zweiten Parameter erst nach entsprechenden Datenaustausch-Prozeduren zwischen einander benachbarten Nebenstationen ermittelt werden können. Dabei können die Parameterwerte iterativ durch wiederholte Datenaustausch-Prozeduren ermittelt und an die tatsächlichen Gegebenheiten sukzessive angepasst werden.

Sofern das beschriebene Verfahren von einer Mehrzahl von sämtlichen Nebenstationen eines funkbetriebenen Multi-Hop Gefahrenmeldesystems durchgeführt wird, dann kann jede Nebenstation bzw. jeder Knoten des Gefahrenmeldesystems selbständig, lediglich mit Informationen über sich und seine unmittelbar benachbarten Nebenstationen durch eine Auswertung der Werte des ersten Parameters und des zweiten Parameters seinen Verbundenheitsgrad und damit die Verbindungssicherheit bzw. die Verbindungsqualität zur Hauptstation ermitteln.

Ein weiterer Vorteil des beschriebenen Verfahrens zum Bestimmen der Verbindungsqualität besteht darin, dass es zur Durchführung des Verfahrens nicht erforderlich ist, die gesamte Topologie des funkbetriebenen Multi-Hop Gefahrenmeldesystems zu kennen. So kann die Verbindungsqualität bereits dann getestet werden, wenn nach dem Einschalten von zumindest einer Komponente des Multi-Hop Gefahrenmeldesystems die Topologie des Gefahrenmeldesystems noch nicht vollständig bekannt ist. Dies gilt auch dann, wenn einem bereits initialisierten Multi-Hop Gefahrenmeldesystem eine oder mehrere weitere Nebenstationen hinzugefügt werden, welche zu den bereits bestehenden Verbindungen weitere Verbindungen hinzufügen und somit die Topologie des Gefahrenmeldesystems verändern. Bei dem beschriebenen Verfahren können somit neue Nebenstationen zu dem Gefahrmeldesystem hinzukommen oder von dem Gefahrmeldesystem entfernt werden, ohne dass das gesamte Gefahrmeldesystem vollständig neu initialisiert werden muss.

Die Hauptstation kann auch als eine Zentrale des Multi-Hop Gefahrenmeldesystems bezeichnet werden. Dabei ist es zwar üblich aber für die Durchführung des beschriebenen Verfahrens nicht unbedingt erforderlich, dass die Hauptstation neben einer Empfangseinheit auch eine Sendeeinheit aufweist, mittels welcher Information an die Nebenstationen übermittelt werden können.

Die Nebenstationen können auch als Peripherieeinheiten des Gefahrenmeldesystems bezeichnet werden, welche zum Erkennen von zumindest einer Gefahrensituation geeignete Sensormittel aufweisen. Die Peripherieeinheiten können beispielsweise einen Branddetektor, einen Rauchmelder, einen Intrusions- bzw. Einbruchmeldedetektor oder einen Wasserdetektor zum Erkennen von lokalen oder globalen Überschwemmungen aufweisen.

Es wird darauf hingewiesen, dass der Begriff unmittelbar benachbarte Nebenstationen bedeutet, dass die betreffenden Nebenstationen mit der ausgewählten Nebenstation in direkter Funkverbindung stehen. Die direkte Funkverbindung wird häufig auch als Link bezeichnet.

Es wird ferner darauf hingewiesen, dass ein Multi-Hop Funk Gefahrenmeldesystem im Sinne der vorliegenden Erfindung ein Funk-Gefahrenmeldesystem ist, in welchem mindestens eine Nebenstation nicht direkt zu der Hauptstation benachbart ist. Dabei weisen zumindest die Nebenstationen jeweils eine Funkempfangs- und eine Funksendeeinrichtung auf. Wenn durch zumindest eine Nebenstation eine Gefahr erkannt wird, dann wird die Hauptstation benachrichtigt.

Gemäß einem weiteren Ausführungsbeispiel der Erfindung hängt der Wert des ersten Parameters lediglich ab (a) von der Distanz zwischen der ausgewählten Nebenstation und der Hauptstation und/oder (b) von der Verbindungsanzahl an voneinander unabhängigen Kommunikationspfaden zwischen der ausgewählten Nebenstation und der Hauptstation.

Der Begriff Kommunikationspfad bezeichnet dabei eine Sequenz von jeweils paarweise benachbarten Stationen, welche zusammen eine Verbindung definierten, die sich von einer Anfangsstation zu einer Zielstation erstreckt und ggf. über mehrere Zwischenstationen verläuft. Dabei werden zwei Kommunikationspfade als voneinander unabhängig bezeichnet, falls die Kommunikationspfade zwischen den beiden Stationen keine gemeinsamen Knoten enthalten.

Der Begriff Distanz einer bestimmten Nebenstation bezeichnet die Anzahl der Verbindungen zwischen zwei paarweise benachbarten Stationen, welche auf dem Kommunikationspfad von der Nebenstation zur Hauptstation liegen.

Gemäß einem weiteren Ausführungsbeispiel der Erfindung hängt der Wert des zweiten Parameters lediglich ab (a) von den Distanzen zwischen jeweils unmittelbar benachbarten Nebenstationen der ausgewählten Nebenstation und der Hauptstation und (b) von den Anzahlen an voneinander unabhängigen Kommunikationspfaden zwischen jeweils den unmittelbar benachbarten Nebenstationen der ausgewählten Nebenstation und der Hauptstation.

Dies bedeutet, dass in der ausgewählten Nebenstation die Information vorgehalten wird, welche Distanz und welche Anzahl an unabhängigen Kommunikationspfaden zur Hautstation die ausgewählte Nebenstation selbst und die unmittelbar benachbarten Nebenstationen aufweisen. Die ausgewählte Nebenstation hat keine Kenntnis von der Distanz und der Anzahl an unabhängigen Kommunikationspfaden zur Hautstation von weiter entfernten Nebenstationen.

Gemäß einem weiteren Ausführungsbeispiel der Erfindung werden für den Wert des zweiten Parameters lediglich unmittelbar benachbarte Nebenstationen berücksichtigt, welche im Vergleich zu der ausgewählten Nebenstation eine gleiche oder eine kleinere Distanz zu der Hauptstation aufweisen. Dies hat den Vorteil, dass für die Ermittlung des zweiten Parameters lediglich diejenigen benachbarten Nebenstationen berücksichtigt werden, welche für die Verbindungssicherheit der ausgewählten Station besonders relevant sind. Zudem können durch die Berücksichtigung lediglich dieser unmittelbar benachbarten Nebenstationen die Ressourcen der ausgewählten Nebenstation weiter geschont werden. Die Nebenstationen eines funkbetriebenen Multi-Hop Gefahrenmeldesystems können demzufolge mit jeweils einem Prozessor ausgestattet sein, welcher eine vergleichsweise geringe Rechenleistung aufweist. Ebenso ist für jede Neberistation lediglich ein vergleichsweise kleiner Datenspeicher erforderlich, um die zur Durchführung des beschriebenen Verfahrens erforderlichen Daten bereitzuhalten.

Gemäß einem weiteren Ausführungsbeispiel der Erfindung weist das Verfahren zusätzlich ein Zuordnen eines Status zumindest zu der ausgewählten Nebenstation, wobei der Status ein Maß für die Anzahl an voneinander unabhängigen Kommunikationspfaden zwischen der ausgewählten Nebenstation und der Hauptstation ist. Dies bedeutet, dass der Status ein Maß für die Redundanz der Kommunikationsverbindung zwischen der ausgewählten Nebenstation und der Hauptstation. Da ein Ausfall einer Nebenstation nie ganz ausgeschlossen werden kann, wird durch die Redundanz der Kommunikationsverbindung somit die Sicherheit bzw. die Zuverlässigkeit der Kommunikationsverbindung angegeben.

Es wird darauf hingewiesen, dass das beschriebene Verfahren auch für mehrere oder sogar für alle Nebenstationen eines bestimmten funkbetriebenen Multi-Hop Gefahrenmeldesystems durchgeführt werden kann. Dabei ist dann jeweils eine andere Nebenstation als ausgewählte Nebenstation zu betrachten.

Gemäß einem weiteren Ausführungsbeispiel der Erfindung weist das Verfahren zusätzlich ein Klassifizieren des Status in verschiedene Zustände auf. Die Zustände können dabei abhängig von den jeweiligen Sicherheitsanforderungen des funkbetriebenen Multi-Hop Gefahrenmeldesystems durch unterschiedliche Schwellwerte bzgl. der Anzahl an voneinander unabhängigen Kommunikationspfaden zwischen der jeweils ausgewählten Nebenstation und der Hauptstation gewählt werden.

Bevorzugt kann den verschiedenen Zuständen jeweils eine eindeutige Farbe zugeordnet werden.
- So kann beispielsweise der Status "Rot" bedeuten, dass die betreffende Nebenstation keine Verbindung zur Hauptstation hat und somit von dem funkbetriebenen Multi-Hop Gefahrenmeldesystem isoliert ist.
- Der Staus "Gelb" kann bedeuten, dass es mindestens eine Verbindung von der betreffenden Nebenstation zur Hauptstation gibt, wobei diese Verbindung aber nicht erstfehlersicher nach der oben beschriebenen Norm VDE0833 für Gefahrmeldeanlagen ist. In diesem Zusammenhang bedeutet erstfehlersicher, dass bei einem Ausfall eines Kommunikationspfades zwischen der betreffenden Nebenstation und der Hauptstation zumindest ein weiterer Kommunikationspfad vorhanden ist, über den Informationen zwischen der betreffenden Nebenstation und der Hauptstation übermittelt werden können.
- Der Staus "Grün" kann bedeuten, dass die betreffende Nebenstation mindestens über X unabhängige Kommunikationspfade zur Hauptstation verfügt, wobei X eine ganze Zahl ist, die größer als 1 ist. Dies bedeutet, dass bei einem Ausfall von X-1 beliebigen Nebenstationen immer noch mindestens ein intakter Kommunikationspfad zwischen der betreffenden Nebenstation und der Hauptstation existiert und für eine Informationsübertragung genutzt werden kann. Für X größer oder gleich 2 ist die Verbindung von der betreffenden Nebenstation zur Hauptstation erstfehlersicher.

Gemäß einem weiteren Ausführungsbeispiel der Erfindung weist das Verfahren zusätzlich ein Anzeigen des aktuellen Zustands der ausgewählten Nebenstation auf. Die Anzeige kann beispielsweise durch eine optische Anzeige erfolgen. Im Falle der Zuordnung von bestimmten Farben zu dem jeweiligen Zustand der ausgewählten Nebenstation kann beispielsweise eine dreifarbige Leuchtdiode oder es können drei Leuchtdioden mit einander verschiedenen Farben verwendet werden. Dabei kann der jeweilige Farbzustand direkt an einem Gehäuse der jeweiligen Nebenstation angezeigt werden.

Durch eine geeignete Visualisierung ist es beim Überprüfen des funkbetriebenen Multi-Hop Gefahrenmeldesystems jederzeit möglich, vor Ort den Status einer Nebenstation des funkbetriebenen Multi-Hop Gefahrenmeldesystems zu überprüfen und gegebenenfalls einen problematischen Knoten bzw. eine problematische Nebenstation schnell und zuverlässig zu identifizieren.

Gemäß einem weiteren Ausführungsbeispiel der Erfindung weist das Verfahren zusätzlich auf (a) ein Detektieren der unmittelbar benachbarten Nebenstationen der ausgewählten Nebenstation, (b) ein Senden einer Anfrage betreffend des Status der detektierten unmittelbar benachbarten Nebenstationen, und (c) ein Empfangen jeweils einer Antwort von den detektierten unmittelbar benachbarten Nebenstationen, wobei die Antwort Informationen über den jeweiligen Status der detektierten unmittelbar benachbarten Nebenstationen enthält.

Das beschriebene Verfahren kann somit bereits bei der Inbetriebnahme des funkbetriebenen Multi-Hop Gefahrenmeldesystems durchgeführt werden. Da jede Nebenstation lediglich Informationen von sich selbst und von ihren unmittelbar benachbarten Nebenstationen einholt, kann die Verbindungsqualität bereits sehr frühzeitig ermittelt werden. Dies gilt insbesondere für Multi-Hop Gefahrenmeldesysteme, welche so groß sind, dass eine vollständige Initialisierung, bei der die gesamte Topologie des Gefahrenmeldesystems experimentell ermittelt wird, eine Zeitdauer von zumindest mehreren zehn Minuten beansprucht.

Bei einer Inbetriebnahme bestimmen die Nebenstationen nach dem Einschalten selbständig ihre unmittelbar benachbarten Stationen. Zusätzlich bestimmen die Nebenstationen ihre Verbindungsanzahl bzw. die Anzahl der unabhängigen Kommunikationspfade zur Hauptstation, welche benötigt wird um zuverlässig Gefahrenmeldungen zur Hauptstation abzuschicken.

Die Anfrage kann gemeinsam durch ein an alle Nebenstationen gerichtetes Anfragesignal erfolgen oder sequentiell durch verschiedene Anfragesignale, die einzeln an die unterschiedlichen Nebenstationen gesendet werden. Alle Verfahrensschritte können selbstständig von der ausgewählten Nebenstation durchgeführt werden.

Gemäß einem weiteren Ausführungsbeispiel der Erfindung weist das Verfahren zusätzlich ein Anpassen des Status der ausgewählten Nebenstation in Abhängigkeit von dem Status der detektierten unmittelbar benachbarten Nebenstationen auf.

Bei Berücksichtigung der Zustände der unmittelbar benachbarten Nebenstationen kann ein weiterer Zustand eingeführt werden. Dieser kann beispielsweise erst dann vergeben werden, wenn der auf die Anzahl der eigenen unabhängigen Kommunikationspfade hin ermittelte Zustand bereits die höchste Verbindungssicherheit hin zu der Hauptstation anzeigt bzw. definiert. Dieser Zustand, welcher beispielsweise mit "Grün plus" bezeichnet werden kann, kann dann vergeben werden, wenn zumindest eine vorgegebene Anzahl an unmittelbar benachbarten Nebenstationen ebenfalls den oben beschriebenen Zustand "Grün" oder den hier beschriebenen Zustand "Grün plus" hat.

Da der Unterschied zwischen den Zustanden "Grün" und "Grün plus" nach außen in der Regel nicht relevant ist, ist es nicht erforderlich, im Falle der oben beschriebenen Zustandsanzeige auch den Zustand "Grün plus" anzuzeigen. In beiden Fällen kann nach außen lediglich der Zustand "Grün" angezeigt werden.

Es wird darauf hingewiesen, dass für die Vergabe des Zustands "Grün plus" auch lediglich die unmittelbar benachbarten Nebenstationen herangezogen werden können, die im Vergleich zu der ausgewählten Nebenstation sog. "Parents" darstellen. In diesem Zusammenhang sind die "Parents" einer Nebenstation diejenigen benachbarten Nebenstationen, welche eine tiefere Distanz als die ausgewählte Nebenstation haben.

Gemäß einem weiteren Ausführungsbeispiel der Erfindung weist das Verfahren zusätzlich ein weiteres Anpassen des Status der ausgewählten Nebenstation in Abhängigkeit von dem Status der detektierten unmittelbar benachbarten Nebenstationen auf.

Das Anpassen des Status kann in vordefinierten zeitlichen Abständen erfolgen. Wird dies für eine Mehrzahl von (ausgewählten) Nebenstationen durchgeführt, dann kann das gesamte funkbetriebenen Multi-Hop Gefahrenmeldesystem langfristig durch wiederholte Aktualisierungen der Zustande der einzelnen Nebenstationen überwacht werden.

Das Anpassen des Status der einzelnen Nebenstationen kann auch still erfolgen, solange definierte Regeln wie beispielsweise die oben genannte Erstfehlerregel eingehalten werden. Dies bedeutet, dass nach außen üblicherweise keine Information ausgegebene wird, wenn sich der Zustand von einer oder von mehreren Nebenstationen ändert, ohne dass eine Nebenstation einen für die Kommunikationssicherheit kritischen Zustand annimmt.

Das genannte Verfahren beschreibt somit eine iterative Beistimmung des Status einer ausgewählten Nebenstation. Bei der iterativen Bestimmung kommunizieren die Nebenstationen regelmäßig mit ihren unmittelbar benachbarten Nebenstationen und tauschen dabei Informationen über deren Status und deren Distanz zur Hauptstation aus. Basierend auf den ausgetauschten Informationen wird der eigene Status jeweils neu berechnet. Dabei kann der Status der ausgewählten Nebenstation bzw. jeder einzelnen Nebenstation zügig zum bestmöglichen Status konvergieren. Dieser Status bzw. der Zustand dieses Status bleibt erhalten, sofern keine Verbindungen zwischen benachbarten Nebenstationen mehr verloren gehen. Solange der Status aller Nebenstationen beispielsweise "Grün" oder "Grün plus" ist, ist das gesamte funkbetriebenen Multi-Hop Gefahrenmeldesystem erstfehlersicher.

Gemäß einem weiteren Aspekt der Erfindung wird ein Verfahren zum Bestimmen des Gesamtstatus eines funkbetriebenen Multi-Hop Gefahrenmeldesystems angegeben, welches eine Hauptstation und eine Mehrzahl von Nebenstationen aufweist. Das Verfahren weist auf (a) ein Durchführen des oben beschriebenen Verfahrens zum Bestimmen der Qualität einer Kommunikationsverbindung für zumindest eine ausgewählte Nebenstation, (b) ein Übermitteln des Status der zumindest einen ausgewählten Nebenstation an die Hauptstation, und (c) ein Bestimmen des Gesamtstatus des funkbetriebenen Multi-Hop Gefahrenmeldesystems basierend auf dem zumindest einen übermittelten Status.

Dem beschriebenen Verfahren zum Bestimmen des Gesamtstatus des funkbetriebenen Multi-Hop Gefahrenmeldesystems liegt die Erkenntnis zugrunde, dass durch eine geeignete Berücksichtigung bzw. Kombinierung des Status von zumindest einer und bevorzugt von aller Nebenstationen, ein für die Übertragungssicherheit innerhalb des gesamten Gefahrmeldesystems aussagekräftiger Gesamtstatus bestimmt werden kann. Dabei kann beispielsweise der Gesamtstatus einfach durch den Status derjenigen Nebenstation bestimmt sein, welche hinsichtlich der Zuverlässigkeit ihrer Kommunikationsverbindung hin zu der Hauptstation den schlechtesten Zustand aufweist.

Der Gesamtstatus kann anlog zu der Anzeige der Zustände der einzelnen Nebenstationen an der Hauptstation angezeigt werden. Auf diese Weise kann sich eine Bedienperson einen schnellen Überblick über den Zustand des gesamten Gefahrenmeldesystems in Bezug auf die Kommunikationssicherheit sämtlicher Nebenstationen verschaffen.

Es wird darauf hingewiesen, dass zur Bestimmung des Gesamtstatus auch die in der oben genannten Norm definierte Erstfehlerregel verwendet werden kann. Durch eine geeignet Anzeige insbesondere an der Hauptstation kann sich eine Bedienperson einen schnellen Überblick über die Erstfehlersicherheit des gesamten Gefahrenmeldesystems verschaffen.

Gemäß einem Ausführungsbeispiel der Erfindung weist das Verfahren zusätzlich ein Darstellen der Topologie des Multi-Hop Gefahrenmeldesystems insbesondere mittels eines Personal Computer Tools auf. Dabei ist unter dem Begriff "Topologie" die Gesamtheit aller Kommunikationsverbindungen zwischen mehreren Nebenstationen und der Hauptstation zu verstehen, welche Kommunikationsverbindungen einen gemeinsamen Datenaustausch gewährleisten. Die Topologie ist dabei entscheidend für die Ausfallsicherheit des Multi-Hop Gefahrenmeldesystems: Nur wenn alternative Kommunikationsverbindungen zwischen verschiedenen Nebenstationen existieren, bleibt bei Ausfällen einzelner Verbindungen die Furiktionsfähigkeit des Gefahrenmeldesystems erhalten.

Die Darstellung der Topologie kann in bekannter Weise als sog. Loop-Stich-Topologie erfolgen, welche einen besonders schnellen Überblick über die Topologie des Multi-Hop Gefahrenmeldesystems liefert.

Gemäß einem weiteren Aspekt der Erfindung wird eine ausgewählte Nebenstation für ein funkbetriebenes Multi-Hop Gefahrenmeldesystem beschrieben, welches neben der ausgewählten Nebenstation weitere Nebenstationen und eine Hauptstation aufweist. Die ausgewählte Nebenstation weist auf (a) eine Sendeeinheit zum Senden von Informationen an zumindest eine unmittelbar benachbarte Nebenstation, (b) eine Empfangseinheit zum Empfangen von Informationen von der zumindest einen unmittelbar benachbarten Nebenstation, und (c) einen Prozessor, welcher mit der Sendeinheit und der Empfangseinheit gekoppelt ist. Der Prozessor ist derart eingerichtet, dass das oben beschriebene Verfahren zum Bestimmen der Qualität einer Kommunikationsverbindung zwischen einer ausgewählten Nebenstation und einer Hauptstation ausführbar ist.

Der ausgewählten Nebenstation liegt die Erkenntnis zugrunde, dass das oben beschrieben Verfahren durch eine einfache Implementierung eines geeigneten Anweisungscodes auf dem Prozessor des funkbetriebenen Multi-Hop Gefahrenmeldesystems durchgeführt werden kann. Der Anweisungscode kann dabei mittels Software und/oder mittels eine geeignet hart verdrahteten Hardware auf dem Prozessor implementiert werden.

Gemäß einem Ausführungsbeispiel der Erfindung sind die Sendeeinheit und/oder die Empfangseinheit lediglich für vorgegebene Zeitspannen aktivierbar. Dies hat den Vorteil, dass in einem gesamten funkbetriebenen Multi-Hop Gefahrenmeldesystem die Sendeeinheiten und/oder die Empfangseinheiten der einzelnen Nebenstationen und ggf. auch der Hauptstation jeweils nur für bestimmte relativ kurze Zeiträume aktiviert sind, so dass während der inaktiven Zeit auf effektive Weise Strom gespart werden kann. Dies erhöht bei batteriebetriebenen Stationen in signifikanter Weise die Lebensdauer der verwendeten Batterie. Dies gilt selbstverständlich auch für wieder aufladbare Batterien.

Bevorzugt kann jede Nebenstation und ggf. auch die Hauptstation periodisch lediglich für einen kurzen Moment empfangsbereit sein. Der zeitliche Versatz der entsprechenden Einschaltzeitpunkte kann zufällig und auch für jede Station unterschiedlich sein. Auch die Periodendauer kann für jede Station unterschiedlich sein. Jede Station kennt aber die Periodendauer und den zeitlichen Versatz aller benachbarten Stationen. Insbesondere kennt damit jede Station zu jedem Zeitpunkt die nächste Empfangsbereitschaftszeit aller benachbarten Stationen.

Gemäß einem weiteren Aspekt der Erfindung wird ein funkbetriebenes Multi-Hop Gefahrenmeldesystem beschrieben, welches aufweist (a) eine Hauptstation und (b) eine ausgewählte Nebenstation und zumindest eine weitere Nebenstation jeweils eingerichtet zum Erkennen einer Gefahr und zum Benachrichtigen der Hauptstation im Falle einer erkannten Gefahr, wobei die ausgewählte Nebenstation und die zumindest eine weitere Nebenstation über eine direkte oder eine indirekte Funkverbindung mit der Hauptstation gekoppelt sind. Die ausgewählte Nebenstation ist derart eingerichtet, dass das oben beschriebene Verfahren zum Bestimmen der Qualität einer Kommunikationsverbindung ausführbar ist.

Dem beschriebenen Gefahrmeldesystem liegt die Erkenntnis zugrunde, dass die Qualität der Funkverbindung zwischen der ausgewählten Nebenstation und der Hauptstation lediglich basierend auf lokal erhältlichen Informationen der ausgewählten Nebenstation und auf lokalen Informationen aus der unmittelbaren Nachbarschaft der ausgewählten Nebenstation bestimmt werden kann. Damit kann die Verbindungsqualität auf Ressourcen sparende Weise bestimmt werden. Es ist nicht notwendig, dass die ausgewählte Nebenstation ein vollständiges Bild des gesamten Gefahrenmeldesystems in einem Speicher vorhält. In dem beschriebenen Gefahrenmeldesystem kann jede Nebenstation selbständig, lediglich mit Informationen über sich und seine unmittelbar benachbarten Nebenstationen durch eine Auswertung der Werte des ersten und des zweiten Parameters seinen Verbundenheitsgrad zur Hauptstation ermitteln.

Gemäß einem weiteren Aspekt der Erfindung wird ein computerlesbares Speichermedium beschrieben, in dem ein Programm zum Bestimmen der Qualität einer Kommunikationsverbindung zwischen einer ausgewählten Nebenstation von einer Mehrzahl an Nebenstationen und einer Hauptstation eines funkbetriebenen Multi-Hop Gefahrenmeldesystems gespeichert ist. Das Programm veranlasst die ausgewählte Nebenstation, wenn es von einem Prozessor der ausgewählten Nebenstation ausgeführt wird, zur Durchführung des oben beschriebenen Verfahrens zum Bestimmen der Qualität einer Kommunikationsverbindung.

Gemäß einem weiteren Aspekt der Erfindung wird ein Programm-Element zum Bestimmen der Qualität einer Kommunikationsverbindung zwischen einer ausgewählten Nebenstation von einer Mehrzahl an Nebenstationen und einer Hauptstation eines funkbetriebenen Multi-Hop Gefahrenmeldesystems beschrieben. Das Programm-Element veranlasst die ausgewählte Nebenstation, wenn es von einem Prozessor der ausgewählten Nebenstation ausgeführt wird, zur Durchführung des oben beschriebenen Verfahrens zum Bestimmen der Qualität einer Kommunikationsverbindung.

Das Programm-Element kann als computerlesbarer Anweisungscode in jeder geeigneten Programmiersprache wie beispielsweise in JAVA, C++ etc. implementiert sein. Das Programm-Element kann auf einem computerlesbaren Speichermedium (CD-Rom, DVD, Wechsellaufwerk, flüchtiger oder nicht-flüchtiger Speicher, eingebauter Speicher/Prozessor etc.) abgespeichert sein. Der Anweisungscode kann einen Computer oder andere programmierbare Geräte derart programmieren, dass die gewünschten Funktionen ausgeführt werden. Ferner kann das Programm-Element in einem Netzwerk wie beispielsweise dem Internet bereitgestellt werden, von dem es bei Bedarf von einem Nutzer herunter geladen werden kann.

Die Erfindung kann sowohl mittels eines Computerprogramms, d.h. einer Software, als auch mittels einer oder mehrerer spezieller elektrischer Schaltungen, d.h. in Hardware oder in beliebig hybrider Form, d.h. mittels Software-Komponenten und Hardware-Komponenten, realisiert werden.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.
- Figur 1: zeigt ein funkbetriebenes Multi-Hop Gefahrenmeldesys- tem, welches eine Hauptstation und eine Mehrzahl von Nebenstationen aufweist, die jeweils derart einge- richtet sind, dass sie ihren Verbindungsstatus zu der Hauptstation basierend auf lokalen Informationen von sich selbst und von den lediglich unmittelbar benach- barten Nebenstationen selbst bestimmen können.
- Figur 2: zeigt eine ausgewählte Nebenstation des in Figur 1 dargestellten Multi-Hop Gefahrenmeldesystems.
- Figur 3: zeigt eine Darstellung eines funkbetriebenen Multi- Hop Gefahrenmeldesystems in der sog. "Loop-Stich"- Topologie für eine Anzeige mittels eines PC-Tools.

An dieser Stelle bleibt anzumerken, dass sich in der Zeichnung die Bezugszeichen von gleichen oder von einander entsprechenden Komponenten lediglich in ihrer ersten Ziffer unterscheiden.

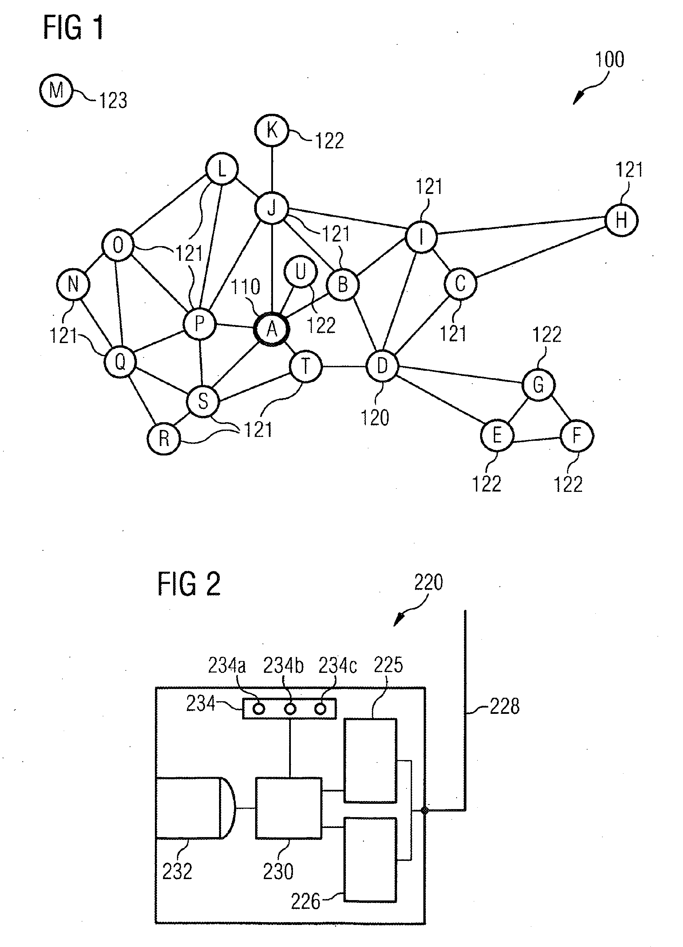

Figur 1 zeigt ein funkbetriebenes Multi-Hop Gefahrenmeldesystem 100 gemäß einem Ausführungsbeispiel der Erfindung. Das Multi-Hop Gefahrenmeldesystem 100 weist eine Hauptstation 110 und mehrere Nebenstationen 120, 121, 122 auf. Die Hauptstation ist mit dem Buchstaben "A" bezeichnet. Die Nebenstationen 120, 121, 122 sind mit den Buchstaben "B" bis "M" bezeichnet. Die Nebenstationen B, J, P, S, T und U sind über eine direkte Funkverbindung mit der Hauptstation A verbunden. Die übrigen Nebenstationen C, D, E, F, G, H, I, K, L, N, O, Q und R sind über eine indirekte Funkverbindung mit der Hauptstation A verbunden. Bei den indirekten Funkverbindungen wird jeweils zumindest eine Nebenstation als Zwischenstation zur Nachrichten- bzw. Ereignisübermittlung verwendet. Für die Nebenstation M besteht aktuell keine Verbindung zu dem restlichen Gefahrenmeldesystem 100.

Gemäß dem hier dargestellten Ausführungsbeispiel sind die Nebenstationen 120, 121, 122 derart eingerichtet, dass sie ihren Verbindungsstatus zu der Hauptstation 110 basierend auf lokalen Verbindungsinformationen von sich selbst und von den lediglich unmittelbar benachbarten Nebenstationen selbst bestimmen können. Die Bestimmung des Verbindungsstatus wird nachfolgend anhand der ausgewählten Nebenstation D beschrieben, welche mit dem Bezugszeichen 120 gekennzeichnet ist.

Um die Verbindungsanzahl der ausgewählten Nebenstation 120, zur Hauptstation 110 anzuzeigen, wird ein Status eingeführt. Gemäß dem hier dargestellten Ausführungsbeispiel kann der Status einer Nebenstation 120, 121, 122 die Zustände Rot, Gelb, oder Grün annehmen. In der Folge wird ein Algorithmus beschrieben, mit welchem die Nebenstation 120 ihren Status bestimmen kann.

Bei dem Algorithmus zur Bestimmung des Status der Nebenstation 120 werden lediglich lokal vorhandene Informationen verwendet. Diese Informationen sind der eigene Anfangsstatus sowie der Status der unmittelbar benachbarten Nebenstationen T und B, welche eine geringere Distanz zur Hauptstation A aufweisen. Optional kann auch der Status der unmittelbar benachbarten Nebenstation I berücksichtigt werden, welche die gleiche Distanz zu der Hauptstation A aufweist wie die ausgewählte Nebenstation D. Ferner können ggf. auch noch die Zustände der unmittelbar benachbarten Nebenstationen C, G und E berücksichtigt werden, welche im Vergleich zu der ausgewählten Nebenstation D eine größere Distanz zu der Hauptstation A aufweisen.

Es wird darauf hingewiesen, dass selbstverständlich auch alle anderen Nebenstationen 121, 122 diesen Algorithmus verwenden können, um ihren eigenen Zustand bzw. ihren eigenen Status zu bestimmen.

Gemäß dem hier dargestellten Ausführungsbeispiel bedeutet Status "Rot", dass es für die betreffende Nebenstation keine Verbindung zu der Hauptstation gibt. In dem in Figur 1 dargestellten Multi-Hop Gefahrenmeldesystem 100 gilt dies für die Nebenstation M.

Status "Gelb" bedeutet, dass es mindestens eine Verbindung von der betreffenden Nebenstation 122 zur Hauptstation 110 gibt, diese Verbindung ist jedoch nicht erstfehlersicher. Dabei bedeutet erstfehlersicher, dass bei einem Ausfall eines Kommunikationspfades zwischen der betreffenden Nebenstation und der Hauptstation zumindest ein weiterer Kommunikationspfad vorhanden ist, über den Informationen zwischen der betreffenden Nebenstation und der Hauptstation übermittelt werden können.

Der Staus "Grün" bedeutet, dass die betreffende Nebenstation 121 mindestens über X unabhängige Kommunikationspfade zur Hauptstation verfügt, wobei X eine ganze Zahl ist, die größer als 1 ist. Gemäß dem hier dargestellten Ausführungsbeispiel ist X gleich 2. Dies bedeutet, dass bei einem Ausfall von einer einzigen beliebigen Nebenstationen immer noch mindestens ein intakter Kommunikationspfad zwischen der betreffenden Nebenstation 120, 121 und der Hauptstation 110 existiert und für eine Informationsübertragung genutzt werden kann.

Ferner wird gemäß dem hier dargestellten Ausführungsbeispiel noch der interne Zustand "Grün plus" verwendet. Dieser Zustand signalisiert innerhalb des Systems, dass die betreffende Station selbst X oder mehr benachbarte sog. Parents hat, welche ebenfalls aktuell den Zustand "Grün" oder den Zustand "Grün plus" haben. Der Unterschied zum Zustand "Grün" ist nach Außen hin nicht relevant. Im Falle einer Anzeige für eine Bedienperson kann deshalb für den Zustand "Grün plus" dieselbe Anzeige verwendet werden wie für den Zustand "Grün".

Durch Übermittlung des Status der Nebenstationen 120, 121, 122 an die Hauptstation 110 kann für das gesamte System 100 ein Status errechnet werden. Hierbei gibt es zwei bevorzugte Varianten
Variante 1: In der ersten Variante wird für eine zuverlässige Kommunikation innerhalb des Multi-Hop Gefahrenmeldesystems 100 verlangt, dass jede Nebenstation den Status "Grün" hat.
Variante 2: In der zweiten Variante wird die Erstfehlerregel nach der oben genannten Norm VDE0833 benutzt, wonach einige Nebenstationen auch nur über einen einzigen Kommunikationspfad erreichbar sein dürfen.

Basierend auf diesen Randbedingungen können für die Bestimmung des Status des gesamten Multi-Hop Gefahrenmeldesystems 100 folgende globale Regeln aufgestellt werden:
Zur Variante 1:
   - Sind alle Nebenstationen im Zustand "Grün", dann befindet sich auch das gesamte Multi-Hop Gefahrenmeldesystem in dem Zustand "Grün".
   - Ist jede Nebenstation mindestens im Zustand "Gelb", dann ist auch der Zustand des gesamten System "Gelb".
   - Ist eine oder sind mehrere Nebenstationen im Zustand "Rot", dann ist auch der Zustand des gesamten Systems "Rot". Dieser Zustand kann beispielsweise dadurch detektiert werden, dass von der Hauptstation nicht alle vorhandenen Nebenstationen erkannt werden.
Zur Variante 2:
   - Ist die Erstfehler-Regel erfüllt, dann ist der Zustand des gesamten Systems "Grün".
   - Ist die Erstfehler-Regel nicht erfüllt, aber jede Nebenstation über einen Kommunikationspfad erreichbar, dann ist der Zustand des gesamten Systems "Gelb".
   - Ist eine Nebenstation nicht erreichbar, dann ist der Zustand des gesamten Systems "Rot". Auch hier kann dieser Zustand dadurch detektiert werden, dass von der Hauptstation nicht alle vorhandenen Nebenstationen erkannt werden.

Nachfolgend wird das Verfahren erläutert, welches die Berechnung des Status einer Nebenstation beschreibt: Die Nebenstationen kommunizieren regelmässig mit ihren benachbarten Stationen und tauschen dabei Informationen über ihren aktuellen Status und über ihre Distanz zur Hauptstation aus. Basierend auf diesen Informationen berechnen die einzelnen Nebenstationen jeweils den eigenen Status neu. Dabei konvergiert der Status jeder einzelner Nebenstation zum bestmöglichen Zustand. Dieser Zustand bleibt erhalten, sofern keine Verbindungen zwischen benachbarten Nebenstationen mehr verloren gehen. Solange der Status aller Nebenstationen "Grün" oder "Grün plus" ist, ist das Netzwerk erstfehlersicher.

Die folgenden in einer Tabelle aufgeführten Regeln zeigen ein Beispiel zur Detektierung des Status durch die Nebenstationen. Andere Regeln sind für die gleichen Statusinformatiönen auch möglich falls beispielsweise eine andere Erstfehlerregel erfüllt werden soll:

| Distanz | Bedingung | Zustand Status: | Bsp. aus Figur 1 für X=2; (mögliche Pfade) |
|---|---|---|---|
| 0 | Erstfehlersichere Funkverbindungen | "Grün plus" | A; (-) |
| 1 | X-1 Peers | "Grün" | B; (B→7A; B→J→A) |
| 1 | Sonst: | "Gelb" | U; (U→A) |
| >1 | Anzahl Parents mit "Grün" bzw. "Grün plus" >= X | "Grün plus" | Q; (Q→P→A; Q→S→A) |
| >1 | Anzahl Parents mit "Grün" bzw. "Grün plus" Plus Anzahl Peers mit "Grün plus" >= X | "Grün" | R; (R→S→A; R→Q→P→A) |
| >1 | Anzahl Parents > 0 | "Gelb" | K; (K→J→A) |
| >1 | Sonst: | "Rot" | M; (-) |

Diese Regeln können regelmäßig und immer wieder zur Bestimmung des Status einer Nebenstation angewendet werden. Dazu müssen die unmittelbar benachbarten Stationen einfach immer wieder miteinander kommunizieren und die entsprechenden Informationen über ihren aktuellen Status und ihre Distanz zur Hauptstation austauschen. Durch dieses Verhalten können insbesondere die folgenden Probleme erfolgreich gelöst werden, die bei herkömmlichen funkbetriebenen Multi-Hop Gefährenmeldesystemen auftreten:
   - Verbindungen zwischen zwei unmittelbar benachbarten Stationen können temporär oder aber auch dauerhaft ausfallen.
   - Neue Verbindungen zwischen zwei unmittelbar benachbarten Stationen zwischen zwei Stationen können hinzukommen, so dass eine neue Nachbarschaftsbeziehung entsteht.
   - Stationen können aus einem System beispielsweise durch einen Defekt oder durch eine leere Batterie verschwinden.
   - Neue Stationen können zu dem System hinzukommen.

Figur 2 zeigt eine ausgewählte Nebenstation 220 des in Figur 1 dargestellten Multi-Hop Gefahrenmeldesystems 100. Die ausgewählte Nebenstation 220 weist eine Sendeeinheit 225 zum Senden von Informationen an zumindest eine unmittelbar benachbarte Nebenstation, eine Empfangseinheit 226 zum Empfangen von Informationen von der zumindest einen unmittelbar benachbarten Nebenstation und einen Prozessor 230 auf, welcher mit der Sendeinheit 225 und mit der Empfangseinheit 226 gekoppelt ist.

Um wie oben beschrieben den aktuellen Status der unmittelbar benachbarten und in Figur 2 nicht dargestellten Nebenstationen zu erfragen, weist die ausgewählte Nebenstation 220 ferner eine Antenne 228 auf, die sowohl mit der Sendeeinheit 225 als auch mit der Empfangseinheit 226 gekoppelt ist.

Der Prozessor 230 ist derart eingerichtet, dass das oben beschrieben Verfahren zum Bestimmen des Status der ausgewählten Nebenstation 220 durchführbar ist. Dazu wird der aktuelle Status der ausgewählten Nebenstation 220 mit den aktuellen Zuständen der der unmittelbar benachbarten Nebenstationen in der oben beschriebenen Weise in Beziehung gewetzt und daraus der aktualisierte Status der ausgewählten Nebenstation 220 bestimmt. Bei dieser Bestimmung wird der aktuelle Status der ausgewählten Nebenstation 220 durch den Wert eines ersten Parameters wiedergegeben. Die aktuellen Zustände der unmittelbar benachbarten Nebenstationen werden durch einen Wert eines zweiten Parameters wiedergegeben.

Der aktuelle Zustand des Status der ausgewählten Nebenstation 220 kann durch eine Anzeigeeinrichtung 234 nach außen angezeigt werden. Gemäß dem hier beschriebenen Ausführungsbeispiel weist die Anzeigeeinrichtung 234 dafür eine grüne Leuchtdiode 234a, eine gelbe Leuchtdiode 234b und eine rote Leuchtdiode 234c auf. Dabei dient die grüne Leuchtdiode 234a der Signalisierung der oben beschriebenen Zustände "Grün" und "Grün plus", die gelbe Leuchtdiode 234b dient der Signalisierung des oben beschriebenen Zustands "Gelb" und die rote Leuchtdiode 234c dient der Signalisierung des. oben beschriebenen Zustands "Rot".

Ferner weist die ausgewählte Nebenstation 220 noch eine mit dem Prozessor 230 gekoppelte Detektionseinrichtung 232 auf, welche beispielsweise ein Branddetektor, ein Rauchmelder, ein Intrusions- bzw. Einbruchsmeldedetektor oder ein Wasserdetektor zum Erkennen von lokalen oder globalen Überschwemmungen ist.

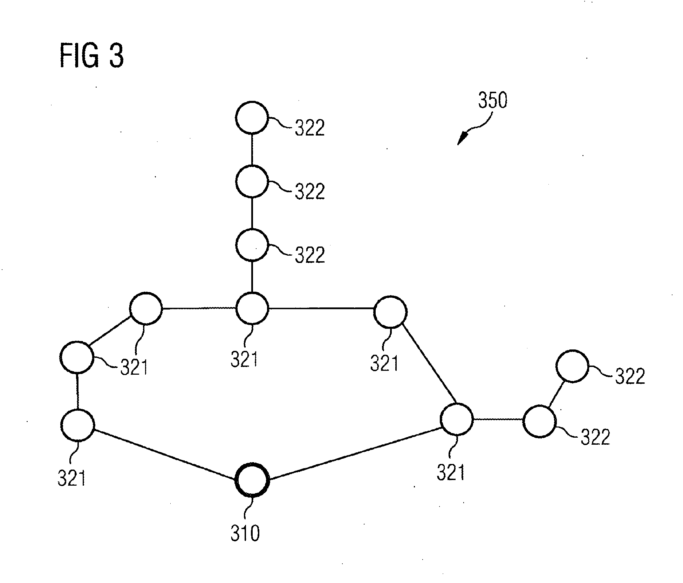

Figur 3 zeigt eine Darstellung 350 eines funkbetriebenen Multi-Hop Gefahrenmeldesystems in der sog. "Loop-Stich"-Topologie. Diese Topologie kann von einem PC-Tool in bekannter Weise basierend auf dem Status und auf der Distanz der einzelnen Nebenstationen bestimmt werden. Die Darstellung 350 erlaubt einer Bedienperson einen besonders schnellen Überblick über die Topologie des Multi-Hop Gefahrenmeldesystems..

In der in Figur 3 dargestellten Loop-Stich"-Topologie sind Nebenstationen mit dem oben definierten Status "Grün" mit dem Bezugszeichen 321 dargestellt. Nebenstationen mit dem oben definierten Status "Gelb" sind mit dem Bezugszeichen 322 versehen. Nebenstationen mit dem Zustand "Rot" sind nicht vorhanden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

## Patentansprüche

1. Verfahren zum Bestimmen der Qualität einer Kommunikationsverbindung zwischen einer ausgewählten Nebenstation (120) von einer Mehrzahl an Nebenstationen (120, 121, 122) und einer Hauptstation (110) eines funkbetriebenen Multi-Hop Gefahrenmeldesystems (100), das Verfahren aufweisend
• Ermitteln eines Wertes eines ersten Parameters für die ausgewählte Nebenstation (120), wobei der Wert des ersten Parameters indikativ ist für die Verbindungssicherheit lediglich zwischen der ausgewählten Nebenstation (120) und der Hauptstation (110),
• Ermitteln eines Wertes eines zweiten Parameters für die ausgewählte Nebenstation (120), wobei der Wert des zweiten Parameters indikativ ist für die Verbindungssicherheiten lediglich zwischen jeweils unmittelbar benachbarten Nebenstationen (121, 122) der ausgewählten Nebenstation (120) und der Hauptstation (110), und
• Bestimmen der Qualität der Kommunikationsverbindung zwischen der ausgewählten Nebenstation (120) und der Hauptstation (110) basierend auf lediglich dem Wert des ersten Parameters und dem Wert des zweiten Parameters.

2. Verfahren nach Anspruch 1, wobei
der Wert des ersten Parameters lediglich abhängt
- von der Distanz zwischen der ausgewählten Nebenstation (120) und der Hauptstation (110) und/oder
- von der Verbindungsanzahl an voneinander unabhängigen Kommunikationspfaden zwischen der ausgewählten Nebenstation (120) und der Hauptstation (110).

3. Verfahren nach Anspruch 2, wobei
der Wert des zweiten Parameters lediglich abhängt
- von den Distanzen zwischen jeweils unmittelbar benachbarten Nebenstationen (121, 122) der ausgewählten Nebenstation (120) und der Hauptstation (110) und
- von den Anzahlen an voneinander unabhängigen Kommunikationspfaden zwischen jeweils den unmittelbar benachbarten Nebenstationen (121, 122) der ausgewählten Nebenstation (120) und der Hauptstation (110).

4. Verfahren nach Anspruch 3, wobei
für den Wert des zweiten Parameters lediglich unmittelbar benachbarte Nebenstationen (121, 122) berücksichtigt werden, welche im Vergleich zu der ausgewählten Nebenstation eine gleiche oder eine kleinere Distanz zu der Hauptstation (110) aufweisen.

5. Verfahren nach einem der Ansprüche 1 bis 4, zusätzlich aufweisend
• Zuordnen eines Status zumindest zu der ausgewählten Nebenstation (120), wobei
der Status ein Maß für die Anzahl an voneinander unabhängigen Kommunikationspfaden zwischen der ausgewählten Nebenstation (120) und der Hauptstation (110) ist.

6. Verfahren nach Anspruch 5, zusätzlich aufweisend
• Klassifizieren des Status in verschiedene Zustände.

7. Verfahren nach Anspruch 6, zusätzlich aufweisend
• Anzeigen des aktuellen Zustands der ausgewählten Nebenstation (120).

8. Verfahren nach einem der Ansprüche 5 bis 7, zusätzlich aufweisend
• Detektieren der unmittelbar benachbarten Nebenstationen (121, 122) der ausgewählten Nebenstation (120),
• Senden einer Anfrage betreffend des Status der detektierten unmittelbar benachbarten Nebenstationen (121, 122),
• Empfangen jeweils einer Antwort von den detektierten unmittelbar benachbarten Nebenstationen (121, 122), wobei die Antwort Informationen über den jeweiligen Status der detektierten unmittelbar benachbarten Nebenstationen (121, 122) enthält.

9. Verfahren nach Anspruch 8, zusätzlich aufweisend
• Anpassen des Status der ausgewählten Nebenstation (120) in Abhängigkeit von dem Status der detektierten unmittelbar benachbarten Nebenstationen (121, 122).

10. Verfahren nach Anspruch 9, zusätzlich aufweisend
• weiteres Anpassen des Status der ausgewählten Nebenstation (120) in Abhängigkeit von dem Status der detektierten unmittelbar benachbarten Nebenstationen (121, 122).

11. Verfahren zum Bestimmen des Gesamtstatus eines funkbetriebenen Multi-Hop Gefahrenmeldesystems (100), welches eine Hauptstation (110) und eine Mehrzahl von Nebenstationen aufweist (120, 121,122), das Verfahren aufweisend
• Durchführen des Verfahrens nach einem der Ansprüche 5 bis 10 für zumindest eine ausgewählte Nebenstation (120),
• Übermitteln des Status der zumindest einen ausgewählten Nebenstation (120) an die Hauptstation (110), und
• Bestimmen des Gesamtstatus des funkbetriebenen Multi-Hop Gefahrenmeldesystems (100) basierend auf dem zumindest einen übermittelten Status.

12. Verfahren nach Anspruch 11, zusätzlich aufweisend
• Darstellen der Topologie des Multi-Hop Gefahrenmeldesystems (100) insbesondere mittels eines Personal Computer Tools.

13. Ausgewählte Nebenstation für ein funkbetriebenes Multi-Hop Gefahrenmeldesystem (100), welches neben der ausgewählten Nebenstation (120, 220) weitere Nebenstationen (121, 122) und eine Hauptstation (110) aufweist, die ausgewählte Nebenstation (120, 220) aufweisend
• eine Sendeeinheit (225) zum Senden von Informationen an zumindest eine unmittelbar benachbarte Nebenstation (121, 122),
• eine Empfangseinheit (226) zum Empfangen von Informationen von der zumindest einen unmittelbar benachbarten Nebenstation (121, 122), und
• einen Prozessor (230), welcher mit der Sendeinheit (225)
und mit der Empfangseinheit (226) gekoppelt ist,
wobei der Prozessor (230) derart eingerichtet ist, dass das Verfahren nach einem der Ansprüche 1 bis 10 ausführbar ist.

14. Ausgewählte Nebenstation nach Anspruch 13, wobei die Sendeeinheit (225) und/oder die Empfangseinheit (226) lediglich für vorgegebene Zeitspannen aktivierbar sind.

15. Funkbetriebenes Multi-Hop Gefahrenmeldesystem, das Gefahrmeldesystem (100) aufweisend
• eine Hauptstation (110), und
• eine ausgewählte Nebenstation (120) und zumindest eine weitere Nebenstation (121, 122) jeweils eingerichtet zum Erkennen einer Gefahr und zum Benachrichtigen der Hauptstation (110) im Falle einer erkannten Gefahr, wobei die ausgewählte Nebenstation (120) und die zumindest eine weitere Nebenstation (121, 122) über eine direkte oder eine indirekte Funkverbindung mit der Hauptstation (110) gekoppelt sind,
wobei
die ausgewählte Nebenstation (120) derart eingerichtet ist, dass das Verfahren nach einem der Ansprüche 1 bis 10 ausführbar ist.

16. Computerlesbares Speichermedium, in dem ein Programm zum Bestimmen der Qualität einer Kommunikationsverbindung zwischen einer ausgewählten Nebenstation (120) von einer Mehrzahl an Nebenstationen (120, 121, 122) und einer Hauptstation (110) eines funkbetriebenen Multi-Hop Gefahrenmeldesystems (100) gespeichert ist,
wobei das Programm, wenn es von einem Prozessor (230) der ausgewählten Nebenstation (120, 220) ausgeführt wird, zum Durchführen des Verfahrens nach einem der Ansprüche 1 bis 10 eingerichtet ist.

17. Programm-Element zum Bestimmen der Qualität einer Kommunikationsverbindung zwischen einer ausgewählten Nebenstation (120, 220) von einer Mehrzahl an Nebenstationen (121, 122) und einer Hauptstation (110) eines funkbetriebenen Multi-Hop Gefahrenmeldesystems (100),
wobei das Programm-Element, wenn es von einem Prozessor (230) der ausgewählten Nebenstation (120, 220) ausgeführt wird, zum Durchführen des Verfahrens nach einem der Ansprüche 1 bis 10 eingerichtet ist.

## Claims

1. Quality estimation of a communication link between a selected secondary station (120) of a plurality of secondary stations (120, 121, 122) and a main station (110) of a radio-operated multi-hop emergency signalling system (100), with the following features
• Determining a value of the first parameter for the selected secondary station (120), with the value of the first parameter being indicative of the connection security only between the selected secondary station (120) and the main station (110),
• Determining a value of a second parameter for a selected secondary station (120), with the value of the second parameter being indicative for the connection securities only between respective directly adjacent secondary stations (121, 122) of the selected secondary station (120) and the main station (110), and
• Quality estimation of the communication link between the selected secondary station (120) and the main station (110) based only on the value of the first parameter and the value of the second parameter.

2. Method according to claim 1, with
The value of the first parameter only depending
- on the distance between the selected secondary station (120) and the main station (110) and/or
- on the number of connections on communication paths independent of one another between the selected secondary station (120) and the main station (110).

3. Method according to claim 2, with
The value of the second parameter only depending
- on the distances between respective directly adjacent secondary stations (121, 122) of the selected secondary station (120) and the main station (110) and
- on the numbers of communication paths independent of one another between the immediately adjacent secondary stations (121, 122) of the selected secondary station (120) in each case and the main station (110).

4. Method according to claim 3, with
only directly adjacent secondary stations (121, 122) being taken into account for the value of the second parameter, which by comparison with the selected secondary station have an equal or a smaller distance from the main station (110).

5. Method according to one of claims 1 to 4, with the following additional features
• Assigning a status at least to the selected secondary station (120), with
the status being a measure for the number of communication paths independent of one another between the selected secondary station (120) and the main station (110).

6. Method according to claim 5, with the following additional features
• Classifying the status into different states.

7. Method according to claim 6, with the following additional features
• Displaying the current status of the selected secondary station (120).

8. Method according to one of claims 5 to 7, with the following additional features
• Detecting the directly adjacent secondary stations (121, 122) of the selected secondary station (120),
• Transmitting a request concerning the status of the detected directly adjacent secondary stations (121, 122),
• Receiving a respective response from the detected directly adjacent secondary stations (121, 122), with the response containing information about a respective status of the detected directly adjacent secondary stations (121, 122).

9. Method according to claim 8, with the following additional features
• Adapting the status of the selected secondary station (120) as a function of the status of the detected directly adjacent secondary stations (121, 122).

10. Method according to claim 9, additionally featuring
• Further adaptation of the status of the selected secondary station (120) as a function of the status of the detected directly adjacent secondary stations (121, 122).

11. A method for assessing the overall status of a radio-operated multi-hop emergency signalling system (100), which comprises a main station (110) and a plurality of secondary stations (120, 121, 122), with the method having the following features
• Execution of the method according to one of claims 5 to 10 for at least one selected secondary station (120),
• Transferring the status of the at least one selected secondary station (120) to the main station (110), and
• Assessing the overall status of the radio-operated multi-hop emergency signalling system (100) based on the at least one transferred status.

12. Method according to claim 11, with the following additional features
• Showing the topology of the multi-hop emergency signalling system (100) especially by means of a personal computer tool.

13. Selected secondary station for a radio-operated multi-hop emergency signalling system (100), which in addition to the selected secondary station (120, 220), features further secondary stations (121, 122) and a main station (110), with the selected secondary station (120, 220) having the following features
• A transmit unit (225) for transmitting information to at least one directly adjacent secondary station (121, 122),
• A receive unit (226) for receiving information from the at least one directly adjacent secondary station (121, 122), and
• A processor (230) which is coupled to the transmit unit (225) and to the receive unit (226),
With the processor (230) being configured such that the method is able to be executed according to one of claims 1 to 10.

14. Selected secondary station according to claim 13, with the transmit unit (225) and/or the receive unit (226) only being able to be activated for the predetermined periods of time.

15. Radio-operated multi-hop emergency signalling system, with the emergency signalling system (100) having the following features
• A main station (110), and
• A selected secondary station (120) and at least one further secondary station (121, 122) each configured for recognizing an emergency and for signalling to the main station (110) in the event of a detected emergency, with the selected secondary station (120) and the at least one further secondary station (121, 122) being coupled via a direct or an indirect radio connection to the main station (110),
with
The selected secondary station (120) being configured such that the method according to one of claims 1 to 10 is able to be executed.

16. Computer-readable storage medium in which a program for quality estimation of the communication link between a selected secondary station (120) of a plurality of secondary stations (120, 121, 122) and a main station (110) of a radio-operated multi-hop emergency signalling system (100) is stored,
with the program, when it is executed by a process (230) of the selected secondary station (120, 220), being configured for executing the method according to one of claims 1 to 10.

17. Program element for quality estimation of a communication link between a selected secondary station (120, 220) of a plurality of secondary stations (121, 122) and a main station (110) of a radio-operated multi-hop emergency signalling system (100),
with the program element, when it is executed by a processor (230) of the selected secondary station (120, 220), being configured for executing the method according to one of claims 1 to 10.

## Revendications

1. Procédé pour déterminer la qualité d'une liaison de communication entre une station secondaire sélectionnée (120) parmi une pluralité de stations secondaires (120, 121, 122) et une station principale (110) d'un système radio de signalement de danger multi-sauts (100), ce procédé incluant :
• la détermination d'une valeur d'un premier paramètre pour la station secondaire sélectionnée (120), la valeur du premier paramètre étant révélatrice de la sécurité de la liaison uniquement entre la station secondaire sélectionnée (120) et la station principale (110) ;
• la détermination d'une valeur d'un deuxième paramètre pour la station secondaire sélectionnée (120), la valeur du deuxième paramètre étant révélatrice de la sécurité des liaisons uniquement entre des stations secondaires (121, 122) respectivement directement voisines de la station secondaire sélectionnée (120) et la station principale (110) et
• la détermination de la qualité de la liaison de communication entre la station secondaire sélectionnée (120) et la station principale (110) sur la seule base de la valeur du premier paramètre et de la valeur du deuxième paramètre.

2. Procédé selon la revendication 1, la valeur du premier paramètre dépendant uniquement
- de la distance entre la station secondaire sélectionnée (120) et la station principale (110) et/ou
- du nombre de liaisons sur des chemins de communication indépendants les uns des autres entre la station secondaire sélectionnée (120) et la station principale (110).

3. Procédé selon la revendication 2, la valeur du deuxième paramètre dépendant uniquement
- des distances entre des stations secondaires (121, 122) respectivement directement voisines de la station secondaire sélectionnée (120) et la station principale (110) et
- des nombres de chemins de communication indépendants les uns des autres entre, respectivement, les stations secondaires (121, 122) directement voisines de la station secondaire sélectionnée (120) et la station principale (110).

4. Procédé selon la revendication 3, seules étant prises en considération, pour la valeur du deuxième paramètre, des stations secondaires directement voisines (121, 122) qui, en comparaison avec la station secondaire sélectionnée, présentent une distance égale ou inférieure par rapport à la station principale (110).

5. Procédé selon l'une des revendications 1 à 4, incluant additionnellement
• l'affectation d'un statut au moins à la station secondaire sélectionnée (120), ce statut étant une mesure du nombre de chemins de communication indépendants les uns des autres entre la station secondaire sélectionnée (120) et la station principale (110).

6. Procédé selon la revendication 5, incluant additionnellement
• le classement du statut selon différents états.

7. Procédé selon la revendication 6, incluant additionnellement
• l'affichage de l'état actuel de la station secondaire sélectionnée (120).

8. Procédé selon l'une des revendications 5 à 7, incluant additionnellement :
• la détection des stations secondaires (121, 122) directement voisines de la station secondaire sélectionnée (120) ;
• l'émission d'une requête concernant le statut des stations secondaires (121, 122) directement voisines qui ont été détectées ;
• la réception de respectivement une réponse des stations secondaires (121, 122) directement voisines qui ont été détectées, la réponse contenant des informations sur le statut respectif des stations secondaires (121, 122) directement voisines qui ont été détectées.

9. Procédé selon la revendication 8, incluant additionnellement
• l'adaptation du statut de la station secondaire sélectionnée (120) en fonction du statut des stations secondaires (121, 122) directement voisines qui ont été détectées.

10. Procédé selon la revendication 9, incluant additionnellement
• l'adaptation du statut de la station secondaire sélectionnée (120) en fonction du statut des stations secondaires (121, 122) directement voisines qui ont été détectées.

11. Procédé pour déterminer le statut global d'un système radio de signalement de danger multi-sauts (100) qui comporte une station principale (110) et une pluralité de stations secondaires (120, 121, 122), ce procédé incluant
• l'exécution du procédé selon l'une des revendications 5 à 10 pour au moins une station secondaire sélectionnée (120) ;
• la communication du statut de l'au moins une station secondaire sélectionnée (120) à la station principale (110) et
• la détermination du statut global du système radio de signalement de danger multi-sauts (100) sur la base de l'au moins un statut communiqué.

12. Procédé selon la revendication 11, incluant additionnellement
• la représentation de la topologie du système de signalement de danger multi-sauts (100), en particulier au moyen d'un « Personal Computer Tool ».

13. Station secondaire sélectionnée pour un système radio de signalement de danger multi-sauts (100), lequel comporte, outre la station secondaire sélectionnée (120, 220), d'autres stations secondaires (121, 122) et une station principale (110), la station secondaire sélectionnée (120, 220) comportant :
• une unité émettrice (225) pour envoyer des informations à au moins une station secondaire (121, 122) directement voisine ;
• une unité réceptrice (226) pour recevoir des informations de l'au moins une station secondaire (121, 122) directement voisine et
• un processeur (230) qui est couplé à l'unité émettrice (225) et à l'unité réceptrice (226),
• le processeur (230) étant aménagé de manière telle que le procédé selon l'une des revendications 1 à 10 peut être exécuté.

14. Station secondaire sélectionnée selon la revendication 13, l'unité émettrice (225) et/ou l'unité réceptrice (226) étant activables uniquement pour des laps de temps prédéterminés.

15. Système radio de signalement de danger multi-sauts, ledit système de signalement de danger (100) comportant
• une station principale (110) et
• une station secondaire sélectionnée (120) et au moins une autre station secondaire (121, 122) respectivement aménagée pour discerner un danger et avertir la station principale (110) en cas de danger discerné, la station secondaire sélectionnée (120) et l'au moins une autre station secondaire (121, 122) étant couplées à la station principale (110) via une liaison radio directe ou une liaison radio indirecte,
la station secondaire sélectionnée (120) étant aménagée de manière telle que le procédé selon l'une des revendications 1 à 10 peut être exécuté.

16. Support de mémoire lisible par ordinateur, dans lequel est enregistré un programme pour déterminer la qualité d'une liaison de communication entre une station secondaire (120) sélectionnée parmi une pluralité de stations secondaires (120, 121, 122) et une station principale (110) d'un système radio de signalement de danger multi-sauts (100), le programme, lorsqu'il est exécuté par un processeur (230) de la station secondaire sélectionnée (120, 220), étant aménagé pour exécuter le procédé selon l'une des revendications 1 à 10.

17. Élément de programme pour déterminer la qualité d'une liaison de communication entre une station secondaire (120, 220) sélectionnée parmi une pluralité de stations secondaires (121, 122) et une station principale (110) d'un système radio de signalement de danger multi-sauts (100), l'élément de programme, lorsqu'il est exécuté par un processeur (230) de la station secondaire sélectionnée (120, 220), étant aménagé pour exécuter le procédé selon l'une des revendications 1 à 10.
